# EUROPÄISCHE PATENTANMELDUNG

(11) **EP 1 293 483 A1**
(43) Veröffentlichungstag der Anmeldung: **19.03.2003**
(21) Anmeldenummer: 01122063.9
(22) Anmeldetag: 14.09.2001
(51) Int. Cl.: C02F 3/06

(54) **Abwasserreinigungsanlage mit Belüftungseinrichtung sowie Belüftungselement hierfür**

(71) Anmelder: Munters Euroform GmbH, 52072 Aachen (DE)
(72) Erfinder: Marggraff, Martin, Dipl.W.Ing., 52146 Würselen (DE)
(74) Vertreter: Patentanwälte Hauck, Graalfs, Wehnert, Döring, Siemons, Schildberg

(57) **Zusammenfassung**

Es wird eine Abwasserreinigungsanlage mit einem Abwasserbecken (20), einem im Abwasserbecken (20) angeordneten Festbett (21) mit im wesentlichen horizontaler Unterseite und einer Belüftungseinrichtung für das Festbett (21) beschrieben. Die Belüftungseinrichtung ist unterhalb des Festbettes (21) angeordnet und umfaßt mindestens ein Belüftungselement (23), das beweglich im Abwasserbecken (20) angeordnet und bei Luftzufuhr durch Auftrieb gegen die Unterseite des Festbettes (21) gedrückt ist. Auf diese Weise wird eine besonders einfach ausgebildete Abwassereinigungsanlage erreicht, die in besonders einfacher Weise gewartet werden kann.

## Beschreibung

Die vorliegende Erfindung betrifft eine Abwasserreinigungsanlage mit einem Abwasserbecken, einem im Abwasserbecken angeordneten Festbett mit im wesentlichen horizontaler Unterseite und einer Belüftungseinrichtung für das Festbett, die unterhalb des Festbettes angeordnet ist und mindestens ein Belüftungselement umfaßt, das eine Luftzuführleitung aufweist bzw. mit einer solchen in Verbindung steht.

Derartige Abwasserreinigungsanlagen sind bekannt. Um eine möglichst gleichmäßige Luft- oder Gasverteilung zu erreichen, müssen alle Lufteintragsstellen im Abwasserbecken auf einer horizontalen Ebene liegen. Eine solche Anordnung der Lufteintragsstellen auf einer horizontalen Ebene wird über eine unterhalb des Festbettes angeordnete Belüftungseinrichtung erreicht, die beispielsweise Teller-, Platten- oder Schlauchbelüftungssysteme umfaßt. Derartige Belüftungssysteme hat man bisher ortsfest angeordnet, und zwar entweder starr am Beckenboden oder starr am Festbett, wobei entsprechende Lager/Stützkonstruktionen verwendet wurden. Auf diese Weise sollte ein Aufschwimmen der Belüftungssysteme aufgrund des Auftriebes der eingeblasenen Luft verhindert werden. Bei der Verwendung von Schlauchbelüftern wurden diese zusätzlich durch Stützkörper von innen oder außen in eine starre Rohrform gebracht.

Diese Vorgehensweise des Standes der Technik ist jedoch mit erheblichen Nachteilen verbunden, weil aufwendige Halte/Stützkonstruktionen und/oder Befestigungen erforderlich sind und weil eine Wartung der Belüftungseinrichtungen entweder nur durch eine Entleerung des Abwasserbeckens oder durch aufwendige Konstruktionen zum Heben und Absenken der Belüftungseinrichtungen erfolgen kann. Dies um so mehr, wenn man berücksichtigt, daß solche Belüfter Verschleißteile sind, die relativ oft gewartet und ausgetauscht werden müssen. Insbesondere bei großen Festbetten ist die Wartung und der Austausch von Belüftungseinrichtungen sehr aufwendig, da die Festbetten mit Hilfe von großen Stahlkonstruktionen aus den Abwasserbecken gehoben werden müssen, nur um an die Belüftungseinrichtungen zu gelangen. Eine Möglichkeit, an die Belüftungseinrichtungen zu gelangen, ohne das Festbett aus dem Abwasserbecken herausnehmen zu müssen, ist bisher nicht bekannt.

Der Erfindung liegt die Aufgabe zugrunde, eine Abwasserreinigungsanlage der eingangs wiedergegebenen Art zu schaffen, die besonders einfach ausgebildet ist und gewartet werden kann.

Diese Aufgabe wird erfindungsgemäß bei einer Abwasserreinigungsanlage der angegebenen Art dadurch gelöst, daß das mindestens eine flexible Belüftungselement beweglich im Abwasserbecken angeordnet und bei Luftzufuhr durch Auftrieb gegen die Unterseite des Festbettes gedrückt ist.

Bei der erfindungsgemäßen Lösung ist somit das mindestens eine Belüftungselement flexibel ausgebildet und beweglich im Abwasserbecken angeordnet. Aufwendige Halte/Stütz/Befestigungskonstruktionen für das Belüftungselement, die am Beckenboden und/oder an der Unterseite des Festbettes angeordnet sind, entfallen daher. Wenn das flexible Belüftungselement mit Luft beaufschlagt wird, wird es durch den dadurch entstehenden Auftrieb gegen die Unterseite des Festbettes gedrückt. Die Unterseite des Festbettes bildet daher die gewünschte Horizontalebene, die sicherstellt, daß die Luftaustrittsstellen des einen Belüftungselementes oder von mehreren Belüftungselementen im Becken im wesentlichen auf einer horizontalen Ebene liegen. Das Festbett selbst hält daher das Belüftungselement oder die Belüftungselemente in einer horizontalen Position. Eine feste Verbindung des Belüftungselementes oder der Belüftungselemente mit dem Beckenboden oder dem Festbett erfolgt nicht.

Wenn das Belüftungselement durch Auftrieb gegen die Unterseite des Festbettes gedrückt ist, kann es sich, je nach der Stärke des Auftriebes, in seitlicher Richtung möglicherweise frei bewegen, d.h. unter Umständen seitlich hin- und herschwingen. Hierdurch wird eine besonders gute Verteilung der Luftaustrittsstellen der Belüftungselemente über die Unterseite des Festbettes erreicht.

Das mindestens eine flexible Belüftungselement kann eine Luftzuführleitung aufweisen bzw. mit einer solchen in Verbindung stehen. Im ersten Fall bilden Belüftungselement und Luftzuführleitung eine Einheit, wobei die Luftzuführleitung beispielsweise als Verlängerung eines Schlauchbelüfters ausgebildet ist und über ihre Länge keine Luftaustrittsstellen aufweist. Die Luftzuführleitung erstreckt sich dann vom Belüftungselement im Abwasserbecken nach oben. Im zweiten Fall ist das Belüftungselement mit einer Luftzuführleitung, beispielsweise einem starren Fallrohr, verbunden, wobei eine lösbare oder unlösbare Verbindung vorgesehen sein kann. In beiden Fällen wird beim Austausch oder bei der Wartung des Belüftungselementes vorzugsweise das Belüftungselement zusammen mit der Luftzuführleitung aus dem Abwasserbecken entfernt, so daß die Reparatur/Austausch- bzw. Wartungsarbeiten bequem durchgeführt werden können.

Die Luftzuführleitung kann in diesem Fall entweder an der Beckenwand oder am Festbett lösbar befestigt oder gehalten sein, und zwar derart, daß für einen Austausch des Belüftungselementes ein einfaches Lösen möglich ist. Die Befestigung des flexiblen Belüftungselementes an der starren Luftzuführleitung (Fallrohr) erfolgt vorzugsweise über ein Eckelement, das das Verbindungsglied zwischen dem horizontal angeordneten Belüftungselement und der vertikal angeordneten Luftzuführleitung (Fallrohr) bildet.

Zweckmäßigerweise weist das Belüftungselement ein zur Oberseite des Abwasserbeckens führendes Halte/Führungs/Spannseil auf. Dieses Seil befindet sich vorzugsweise an dem Ende des Belüftungselementes, an dem nicht die Luftzufuhr erfolgt. Das Seil ist vorzugsweise so lang ausgebildet, daß es nach dem Entfernen des Belüftungselementes mit Luftzuführleitung aus dem Becken weiterhin aus dem Becken herausraugt, so daß bei erneuter Einführung des Belüftungselementes dieses durch Ziehen des Seiles in seine Position unterhalb des Festbettes gebracht werden kann. Das Belüftungselement kann dann mit Hilfe des Seiles beispielsweise in eine Position gebracht werden, in der das Element im Abstand von der Unterseite des Festbettes angeordnet ist. Durch den durch die Luftzufuhr bewirkten Auftrieb wird dann das Belüftungselement gegen die Unterseite des Festbettes gedrückt. Das Seil kann aber auch bereits so straff gezogen werden, daß das Belüftungselement schon ohne Luftzufuhr die Unterseite des Festbettes kontaktiert. Der durch die spätere Luftzufuhr bewirkte Auftrieb unterstützt dann die Fixierung des Belüftungselementes an der Unterseite des Festbettes.

Das Seil kann somit Halte-, Führungs- und/oder Spannfunktionen übernehmen, je nach Bedarf. Es sichert in jedem Falle eine einfache und rasche Entfernungsmöglichkeit des Belüftungselementes aus dem Becken und Wiedereinführbarkeit desselben in das Becken. Beim ersten Anordnen des Belüftungselementes im Becken kann dieses ohne weiteres mit Hilfe des Seiles im unteren Beckenbereich plaziert werden, da das Festbett später eingesetzt wird.

Das Belüftungselement ist vorzugsweise als Schlauchbelüfter ausgebildet, der die geforderte Flexibilität sichert. Diese Schlauchbelüfter müssen nicht, wie beim Stand der Technik, zusätzlich durch Stützkörper von innen oder außen in eine starre Rohrform gebracht werden. Ein solcher Schlauchbelüfter kann eine Schlauchverlängerung besitzen, die als Luftzuführleitung dient und, wie vorstehend erwähnt, an der Beckenwand oder am Festbett lösbar fixiert sein kann. Bei einer solchen Ausbildung als Schlauchbelüfter streckt sich das Belüftungselement durch die eingeblasene Luft vorzugsweise selbst und gelangt hierdurch in die gewünschte Position.

Es versteht sich, daß das vorstehend erwähnte Halte/Führungs/Spannseil auch von äquivalenten Einrichtungen gebildet sein kann.

Wartungsarbeiten für das Belüftungselement können daher während des Betriebes des Abwasserbeckens durchgeführt werden, ohne daß das Festbett entfernt oder das Becken entleert werden muß.

Zur Verringerung des Verschleißes des Belüftungselementes ist bei einer speziellen Ausführungsform das Festbett mit speziellen reibungsarmen und gratfreien Kanten versehen.

In Weiterbildung der Erfindung hat das Festbett auf seiner Unterseite Posititonierungseinrichtungen, wie Aussparungen oder Kanäle, für das Belüftungselement. Diese Ausführungsform findet beispielsweise dann Anwendung, wenn im Betriebszustand des Belüftungselementes eine freie Bewegungsmöglichkeit desselben in seitlicher Richtung an der Unterseite des Festbettes nicht erwünscht ist. Die Positionierungseinrichtungen können hierbei eine gleichmäßige Verteilung von mehreren Belüftungselementen über die Unterseite des Festbettes sicherstellen.

Bei einer weiteren Ausführungsform weist der Boden des Abwasserbeckens Aufnahmeeinrichtungen für das Belüftungselement, wie Aussparungen oder Kanäle, zum Schutze desselben vor der Festbettbelastung bei Beckenentleerung auf. Diese Ausführungsform gelangt bei schwimmend angeordneten Festbettkonstruktionen zum Einsatz, um zu verhindern, daß das sich auf dem Beckenboden absetzende Festbett das Belüftungselement zerstört oder beschädigt. Ist das Belüftungselement in einem entsprechenden Kanal angeordnet, kann es trotz abgesenktem Festbett aus dem Becken in der vorstehend beschriebenen Weise entfernt werden und nach entsprechender Wartung in dieses wieder zurückgeführt werden.

Bei der Erfindung kommen im wesentlichen zwei Festbettarten zum Einsatz. Bei einer ersten Ausführungsform weist die Anlage eine Haltekonstruktion zur Befestigung des Festbettes an der Abwasserbeckenwand und/oder am Abwasserbeckenboden auf. Bei dieser Ausführungsform ist somit das Festbett im Becken fixiert. Bei einer zweiten Ausführungsform ist das Festbett mit Hilfe mindestens eines Auftriebkörpers schwimmend im Abwasserbecken angeordnet und wird in dieser Lage durch spezielle Einrichtungen, beispielsweise Schwimmkragen, geführt. Bei beiden Ausführungsformen findet die erfindungsgemäße Ausgestaltung und Anordnung des Belüftungselementes Anwendung.

Die Erfindung betrifft ferner ein Belüftungselement zur Verwendung in einer Abwasserreinigungsanlage der vorstehend beschriebenen Art. Dieses Belüftungselement ist vorzugsweise als Schlauchbelüfter ausgebildet.

Die Erfindung wird nachfolgend anhand eines Ausführungsbeispieles in Verbindung mit der Zeichnung im einzelnen erläutert. Es zeigen:
- Figur 1: einen Vertikalschnitt durch ein mit einem Festbett versehenes Abwasserbecken einer herkömmlich ausgebildeten Abwasserreinigungsanlage;
- Figur 2: einen Vertikalschnitt entsprechend Figur 1 eines mit einem Festbett versehenen Abwasserbeckens einer erfindungsgemäß ausgebildeten Abwasserreinigungsanlage; und
- Figur 3: einen Schnitt durch das Abwasserbecken der Figur 2 senkrecht zur Bildebene der Figur 2.

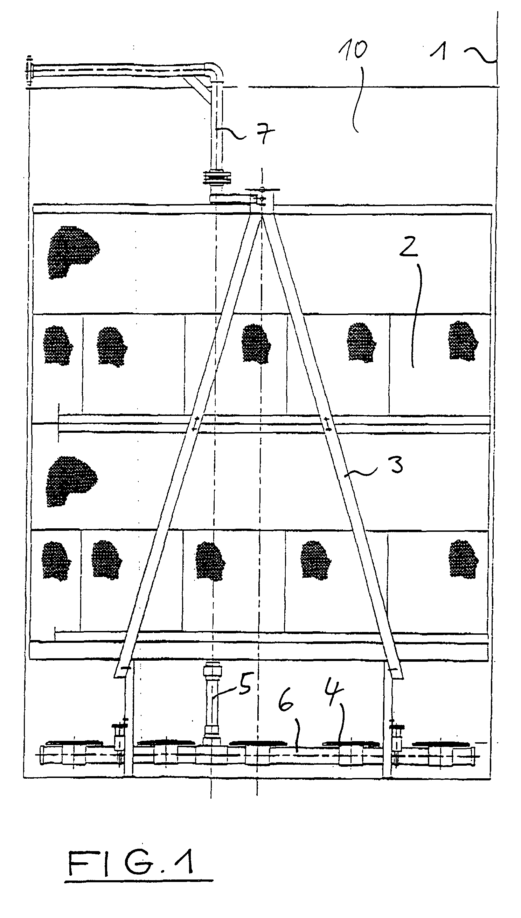

Das in Figur 1 gezeigte Abwasserbecken 10 einer herkömmlich ausgebildeten Abwasserreinigungsanlage hat eine Beckenwand 1 sowie ein im Becken angeordnetes Festbett 2. Unterhalb des Festbettes 2 befindet sich eine Belüftungseinrichtung, die aus einer Vielzahl von Tellerbelüftern 4 besteht, welche über eine Luftzuführleitung 6 miteinander verbunden sind, wobei sich die Luftzuführleitung in einem Vertikalabschnitt 5 durch das Festbett bis zum einem aus dem Festbett herausführenden Abschnitt 7 erstreckt. Die Belüftungseinrichtung ist über eine bei 3 dargestellte Haltekonstruktion am Beckenboden und am Festbett ortsfest angeordnet. Wenn bei dieser Ausführungsform die Belüftungseinrichtung gewartet bzw. repariert werden muß, muß das gesamte Festbett mit der daran angebrachten Konstruktion für die Belüftungseinrichtung aus dem Becken gehoben werden. Dies ist aufwendig und teuer und bedingt darüber hinaus lange Stillliegezeiten der Abwasserreinigungsanlage.

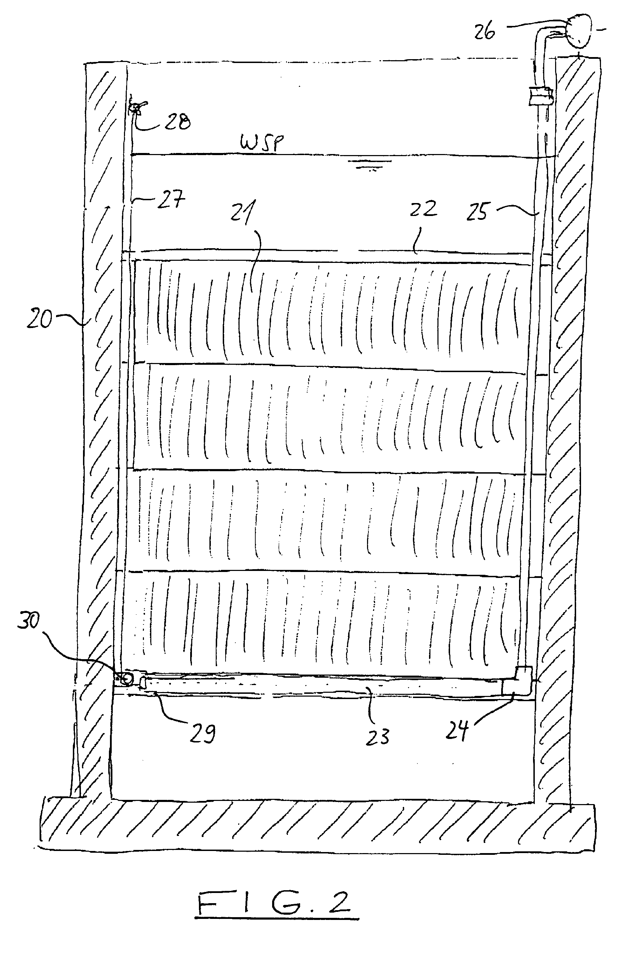

Figur 2 zeigt einen entsprechenden Schnitt wie Figur 1 durch das Abwasserbecken einer erfindungsgemäß ausgebildeten Abwasserreinigungsanlage. Das Becken hat eine Beckenwand 20. Im Becken ist ein Festbett 21 angeordnet. Das Festbett 21 ist über eine Haltekonstruktion im Becken befestigt, wobei diese Haltekonstruktion Festbettniederhaltestreben 22 und Festbettunterstützungsstreben 29 aufweist. Infolge dieser Konstruktion kann das Festbett im Becken nicht aufschwimmen.

In Figur 2 ist das Becken im gefüllten Zustand gezeigt, wobei der Abwasserspiegel mit WSP gekennzeichnet ist. Am Festbett 1 ist lösbar eine als Fallrohr ausgebildete Luftzuführleitung 25 angeordnet, die außerhalb des Beckens in ein Luftzuführsystem 26 mündet. Die Luftzuführleitung erstreckt sich vom System 26 senkrecht nach unten bis zur Unterseite des Festbettes und geht von dort über ein Eckelement 24 in eine Reihe von Belüftungselementen 23 über, die als Schlauchbelüfter ausgebildet sind. Am gegenüberliegenden, d.h. in Figur 2 linken Ende ist jeder Schlauchbelüfter mit einem Führungs/Halte/Spannseil 27 verbunden, das vom Belüfter über eine Rolle 30 seitlich am Festbett vorbei nach oben über den Abwasserspiegel geführt ist und in einem Befestigungspunkt 28 endet.

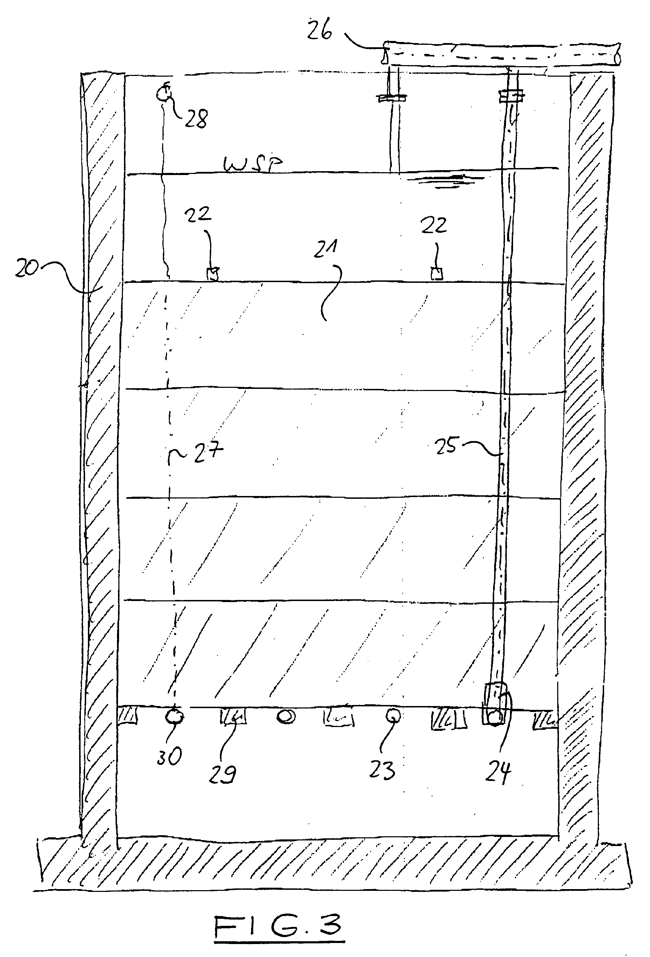

Figur 3 zeigt das Becken der Figur 2 in einem senkrecht zur Bildebene der Figur 2 geführten Schnitt.

Jeder Schlauchbelüfter ist als flexibler Schlauch ausgebildet, der auf seiner Oberseite eine Vielzahl von Luftaustrittsöffnungen besitzt. Im Betrieb der Anlage wird der Schlauchbelüfter bei Beaufschlagung mit Luft über die Luftzuführleitung 25 durch den hierdurch erzeugten Auftrieb nach oben gegen die Unterseite des Festbettes 21 gedrückt, so daß sämtliche Belüftungselemente auf der gleichen Horizontalebene liegen, wodurch eine gleichmäßige Luftverteilung sichergestellt wird.

Bei der hier beschriebenen Vorrichtung kann die Belüftungseinrichtung repariert bzw. gewartet werden, ohne daß das Festbett aus dem Becken entfernt bzw. das Becken entleert werden muß. Hierzu wird das Seil 27 von seinem Befestigungspunkt 28 gelöst. Die Luftzuführleitung 25 wird vom Festbett gelöst und vom Luftzuführsystem 26 getrennt. Sie wird dann aus dem Becken nach oben gezogen, wodurch die damit in Verbindung stehenden Belüftungselemente 23 sowie die entsprechenden Seile 27 mit nach oben aus dem Becken herausgezogen werden. Die Seile 27 sind so lang, daß deren Endbereich immer noch über dem Abwasserspiegel liegt, wenn die Belüftunselemente 23 bereits aus dem Becken herausgezogen worden sind. Außerhalb des Beckens kann dann eine Reparatur oder ein Austausch der Belüftungselemente 23 vorgenommen werden, nachdem diese von der Luftzuführleitung 25 getrennt worden sind. Die neuen Belüftungselemente 23 werden wieder mit der Luftzuführleitung 25 verbunden und zusammen mit dieser in das Becken abgesenkt. Die Luftzuführleitung wird wieder an das Luftzuführsystem angeschlossen. Mit Hilfe des Seiles 27 werden die einzelnen Belüftungselemente straff gezogen, so daß sie ihre gewünschte Lage unterhalb des Festbettes einnehmen. Bei Luftzufuhr strecken sich die Belüftungselemente 23 und werden durch den Auftrieb nach oben gegen die Unterseite des Festbettes gedrückt. In diesem Zustand kann dann durch Befestigung des Seiles 27 eine definierte Lage der Belüftungselemente 23 erreicht werden.

## Patentansprüche

1. Abwasserreinigungsanlage mit einem Abwasserbecken, einem im Abwasserbecken angeordneten Festbett (21) mit im wesentlichen horizontaler Unterseite und einer Belüftungseinrichtung für das Festbett (21), die unterhalb des Festbettes (21) angeordnet ist und mindestens ein Belüftungselement (23) umfaßt, das eine Luftzuführleitung (25) aufweist bzw. mit einer solchen in Verbindung steht, **dadurch gekennzeichnet, daß** das mindestens eine flexible Belüftungselement (23) beweglich im Abwasserbecken angeordnet und bei Luftzufuhr durch Auftrieb gegen die Unterseite des Festbettes (21) gedrückt ist.

2. Abwasserreinigungsanlage nach Anspruch 1, **dadurch gekennzeichnet, daß** das mindestens eine flexible Belüftungselement (23) an einer starren Luftzuführleitung (Fallrohr) (25) befestigt ist.

3. Abwasserreinigungsanlage nach Anspruch 2, **dadurch gekennzeichnet, daß** das Belüftungselement (23) über ein Eckelement (24) an der Luftzuführleitung (Fallrohr) (25) befestigt ist.

4. Abwasserreinigungsanlage nach einem der vorangehenden Ansprüche, **dadurch gekennzeichnet, daß** das Belüftungselement (23) ein zur Oberseite des Abwasserbeckens führendes Halte/Führungs/Spannseil (27) aufweist.

5. Abwasserreinigungsanlage nach einem der vorangehenden Ansprüche, **dadurch gekennzeichnet, daß** das Belüftungselement (23) als Schlauchbelüfter ausgebildet ist.

6. Abwasserreinigungsanlage nach einem der vorangehenden Ansprüche, **dadurch gekennzeichnet, daß** das Festbett auf seiner Unterseite Positionierungseinrichtungen, wie Aussparungen oder Kanäle, für das Belüftungselement aufweist.

7. Abwasserreinigungsanlage nach einem der vorangehenden Ansprüche, **dadurch gekennzeichnet, daß** der Boden des Abwasserbeckens Aufnahmeeinrichtungen für das Belüftungselement, wie Aussparungen oder Kanäle, zum Schutze desselben vor der Festbettbelastung bei Beckenentleerung aufweist.

8. Abwasserreinigungsanlage nach einem der vorangehenden Ansprüche, **dadurch gekennzeichnet, daß** es eine Haltekonstruktion (22, 29) zur Befestigung des Festbettes (21) an der Abwasserbeckenwand (20) und/oder am Abwasserbeckenboden aufweist.

9. Abwasserreinigungsanlage nach einem der Ansprüche 1 bis 7, **dadurch gekennzeichnet, daß** das Festbett mit Hilfe mindestens eines Auftriebkörpers schwimmend im Abwasserbecken angeordnet ist.

10. Belüftungselement (23) zur Verwendung in einer Abwasserreinigungsanlage nach einem der vorangehenden Ansprüche.

11. Belüftungselement (23) nach Anspruch 10, **dadurch gekennzeichnet, daß** es als Schlauchbelüfter ausgebildet ist.
